# EUROPÄISCHE PATENTSCHRIFT

(11) **EP 2 862 244 B1**
(45) Veröffentlichungstag und Bekanntmachung des Hinweises auf die Patenterteilung: **13.01.2016**
(21) Anmeldenummer: 14701317.1
(22) Anmeldetag: 16.01.2014
(51) Int. Cl.: H01R 25/16, H02G 5/00

(54) **VERBINDUNGSELEMENT FÜR EINE SCHLEIFLEITUNG, SCHLEIFLEITUNG UND VERFAHREN ZUR HERSTELLUNG EINER SCHLEIFLEITUNG**
CONNECTING ELEMENT FOR A CONTACT LINE, CONTACT LINE, AND METHOD FOR PRODUCING A CONTACT LINE
ÉLÉMENT D'ASSEMBLAGE POUR LIGNE DE CONTACT, LIGNE DE CONTACT ET PROCÉDÉ DE FABRICATION D'UNE LIGNE DE CONTACT

(30) Priorität: 16.01.2013 DE 102013100435
(43) Veröffentlichungstag der Anmeldung: 22.04.2015
(73) Patentinhaber: Conductix-Wampfler GmbH, 79576 Weil am Rhein (DE)
(72) Erfinder: SCHIRMEIER, Frank, 79650 Schopfheim (DE)
(74) Vertreter: Charrier, Rapp & Liebau
(86) Internationale Anmeldenummer: PCT/EP2014/050753
(87) Internationale Veröffentlichungsnummer: WO 2014/111441

(56) Entgegenhaltungen:
- EP-A1- 0 910 137
- WO-A1-86/01944
- DE-A1- 19 755 513
- US-A- 2 882 356
- US-A- 3 541 224

## Beschreibung

Die Erfindung betrifft ein Verbindungselement zur Verbindung von Leitersträngen einer Schleifleitung nach dem Oberbegriff des Anspruchs 1, einen Bausatz für eine Schleifleitung nach dem Oberbegriff des Anspruchs 6, eine Schleifleitung nach dem Oberbegriff des Anspruchs 11 und ein Verfahren zur Herstellung einer Schleifleitung nach dem Oberbegriff des Anspruchs 15.

Aus der DE 197 55 513 C2 ist ein Dehnverbinder für aufeinanderfolgende Stromschienen einer Schleifleitung bekannt. Der Dehnverbinder kann in Längshohlkammern von aneinandergrenzenden Stromschienen eingesteckt werden und stellt automatisch die elektrische Verbindung zwischen den Stromschienen her. Hierzu weist er eine Kunststoffaufnahme auf, die in Höhe der Längshohlkammern der beiden Stromschienen einen Quersteg aufweist, von dem auf beiden Seiten jeweils in Längsrichtung der Stromschienen zwei Metallstege ausgehen, welche senkrecht zur Längsrichtung und zum Quersteg auseinanderfedernd beaufschlagt sind. Die Metallstege greifen in die Längshohlkammern ein und werden federnd an die Innenflächen des Metallprofils der Stromschienen gerückt. Die federnde Beaufschlagung der Metallstege soll dort sicherstellen, dass bei allen denkbaren Relativstellungen von Stromschienen und Kunststoffaufnahme eine elektrische Verbindung sicher gewährleistet ist. Der Dehnverbinder ist jedoch konstruktiv aufwendig, da dort in Bohrungen des Querstegs Schraubenfedern eingesetzt werden müssen, welche die Metallstege auseinanderspreizen.

Lässt die Federkraft im Lauf der Zeit nach, besteht zudem die Gefahr eines unerwünschten Lösens der verbundenen Stromschienen. Weiter müssen dort zur sicheren Befestigung der Kunststoffaufnahme an den Stromschienen an die Kunststoffaufnahme angespritzte Stifte vorgesehen werden, welche in entsprechende Bohrungen des Dehnverbinders eingreifen. Dies ist nachteilig, da die Kunststoffstifte abbrechen können. Zudem muss bei der Montage eine genaue Zentrierung der Stifte auf die Bohrungen erfolgen. Diese Ausgestaltungen erhöhen den konstruktiven Aufwand für die Herstellung des Dehnverbinders und erschweren die Montage des Dehnverbinders vor Ort.

Die FR 2 889 773 A1 offenbart ein Verbindungsstück für eine Schleifleitung mit zwei Klauen, welche die Seitenwandungen der Schleifleitungsschienen umgreifen und diese zu einem Anschlagselement hindrücken, um sowohl eine mechanische als auch elektrisch sichere Verbindung zu ermöglichen. Zur Fixierung werden die Klauen aufwendig und zeitraubend miteinander verschraubt. Zusätzlich sind dort Löcher in den Seitenwandungen der Schleifleitungen und korrespondierende Stifte an dem Verbindungsstück vorgesehen, um ein Verschieben des Verbindungsstücks in Längsrichtung zu verhindern. Da die Klauen über wieder lösbare Schraubverbindungen fixiert werden, ist eine dauerhafte Verformung der dortigen gebogenen Seitenflanken unerwünscht und wird u.a. durch ein zwischen den Seitenflanken angeordnetes Anschlagsstück verhindert.

Die DE 295 09 987 U1 offenbart einen Bausatz von Steckverbindern zum Verbinden von mindestens zwei jeweils ein- oder mehrphasigen Stromschienen im Niedervoltbereich zum Anbringen von Leuchten im Niedervoltbereich. Dabei ist der Steckverbinder massiv ausgeführt, so dass er die Hohlräume in den zu verbindenden Stromschienen vollkommen verschließt. Somit kann er nicht bei Schleifleitungen eingesetzt werden, da in deren Hohlräumen die Schleifkontakte frei eingreifen und durchgleiten können müssen

Die DE 196 41 090 C2 offenbart einen Verbinder für Stromschienen, wobei der Verbinder ein Winkelstück ist, das aus einem Gelenk in wenigstens zwei Teilen besteht, welche durch eine Gelenkachse drehbar miteinander verbunden sind. An den Winkelstückteilen sind Kupplungsteile angebracht, die in Hohlräume an den Enden der miteinander zu verbindendenen Stromschienen eingesteckt werden. Das Winkelstück weist keinen durchgehenden Hohlraum auf, so dass der Verbinder nicht bei Schleifleitungen verwendet werden kann, da die Schleifkontakte nicht frei durch die Hohlräume der Stromschienen durchgleiten können.

Die US 2,882,356 offenbart eine aus mehreren aneinandergefügten Abschnitten bestehende Schleifleitung. Die einzelnen Abschnitte werden über eine überlappende Lasche verbunden, die an den benachbarten Enden zweier Abschnitte mit den beiden Abschnitten verschraubt wird. Dies weist den Nachteil auf einer aufwendigen und zeitraubenden Montage auf Zudem besteht das Verbindungselement aus mehreren Teilen, was die Herstellung und den Transport erschwert.

Die DE 197 55 513 A1 offenbart einen Dehnverbinder für aufeinanderfolgende Stromschienen einer Schleifleitung, die aus einem Metallprofil mit einer Längshohlkammer sowie mit einer zwischen zwei vorkragenden Profilflanschen vorgesehenen Schleiffläche und aus einem das Metallprofil mit Ausnahme der Schleiffläche ummantelnden Kunststoffprofil aufgebaut sind. Das Kunststoffprofil besteht aus einer die zugeordneten Enden der Stromschienen aufnehmenden, deren Schleifflächen freilassenden Kunststoffaufnahme, in der die beiden Enden der Stromschienen jeweils zwischen zwei Anschlägen relativ zueinander längsverschiebbar sind, wobei die Metallprofile der beiden Stromschienen elektrisch miteinander verbunden sind. Um die elektrische Verbindung beim Zusammenführen von Kunststoffaufnahme und Stromschienen gleichsam automatisch herzustellen, weist die Kunststoffaufnahme in Höhe der Längshohlkammer der beiden Stromschienen einen Quersteg aufweist, der auf beiden Seiten jeweils mit einem durchlaufenden Metallsteg belegt ist, dass die beiden Metallstege senkrecht zur Längsrichtung und zum Quersteg auseinanderfedernd beaufschlagt sind und dass der Quersteg mit den beiden Metallstegen in die Längshohlkammern eingreift, wobei die Metallstange im Gleitkopf mit den zugeordneten Innenflächen des Metallprofils stehen. Diese Ausführung weist den Nachteil auf, dass sie sehr aufwendig ist.

Die US 3,541,224, EP 0910137 A1 und WO 86/01944 offenbaren Stromschienen für die stationäre Versorgung, ermöglichen also keine Verwendung bei Schleifleitungen mit an der Schleifleitung verfahrbaren Verbrauchern.

Aufgabe der Erfindung ist es deshalb, ein Verbindungselement zur Verbindung von zwei Leitersträngen einer Schleifleitung bereitzustellen, der einfach und kostengünstig herstellbar ist, leicht vor Ort montiert werden kann und ein schnelles und einfaches Verbinden von Leitersträngen einer Schleifleitung ermöglicht.

Die Erfindung löst diese Aufgabe durch ein Verbindungselement mit den Merkmalen des Anspruchs 1, einen Bausatz für eine Schleifleitung mit den Merkmalen des Anspruchs 6, eine Schleifleitung mit den Merkmalen des Anspruchs 11 sowie ein Verfahren zum Verbinden von zwei Stromschienen einer Schleifleitung mit den Merkmalen des Anspruchs 15. Vorteilhafte Ausgestaltungen und zweckmäßige Weiterbildungen der Erfindung sind in den abhängigen Ansprüchen angegeben.

Ein eingangs genanntes Verbindungselement ist erfindungsgemäß dadurch gekennzeichnet, dass der Grundkörper auf mindestens einer seiner Längsseiten Verbindungsvertiefungen zum Vercrimpen mit mindestens einer Seitenwandung der Stromschienen aufweist.

Bevorzugt können auf beiden einander gegenüberliegenden Längsseiten des Grundkörpers Verbindungsvertiefungen zum Vercrimpen mit einander gegenüberliegenden Seitenwandungen der Stromschienen vorgesehen sein. Da dabei beide Längsseiten im Bereich der Verbindungsvertiefungen plastisch in diese verformt werden, ergibt sich eine gut elektrisch leitende und mechanische fest Verbindung, welche zudem schnell hergestellt werden kann.

Bevorzugt können die Verbindungsvertiefungen nach oben hin offen und/oder U-förmig ausgebildet sein. Weiter können vorteilhaft zwischen benachbarten Verbindungsvertiefungen Verbindungsstege ausgebildet sein.

Um ein zu weites Einstecken des Verbindungselements in die Stromschienen zu vermeiden und für das Vercrimpen in einem Crimpwerkzeug angeordnete Druckstege einfach und schnell auf die Verbindungsvertiefungen ausrichten zu können, kann der Grundkörper mindestens einen quer zur Längsrichtung des Grundkörpers herausragenden Längsanschlag aufweisen.

Vorteilhaft kann der Grundkörper mindestens einen in seiner Längsrichtung verlaufenden Zentriersteg aufweisen, welcher in eine längliche Zentrieröffnung der Stromschienen zu liegen kommt. Der Zentriersteg kann vorteilhaft als Andruckfläche für Zentrierkanten der Stromschienen dienen, die beim Vercrimpen an den Zentriersteg gedrückt und dann mit Seitenwandungen der Stromschienen zusammengedrückt werden.

Dabei können parallel und seitlich zum Zentriersteg V-förmige Längsnuten verlaufen. Weiter können die Verbindungsvertiefungen vorteilhaft die äußeren Kanten der V-förmigen Längsnuten nach oben hin vollständig unterbrechen. Dabei können bevorzugt im Bereich von zwischen benachbarten Verbindungsvertiefungen ausgebildeten Verbindungsstegen die äußeren Kanten der V-förmigen Längsnuten noch stehen

Bevorzugt kann das Verbindungselement aus einem elektrisch leitfähigen Material, insbesondere Aluminium oder Kupfer, hergestellt sein. Weiter bevorzugt kann das Verbindungselement aus dem gleichen oder einem härteren Material wie die Stromschienen hergestellt sein.

Ein eingangs genannter Bausatz ist erfindungsgemäß durch ein oben und nachfolgend beschriebenes erfindungsgemäßes Verbindungselement gekennzeichnet. Vorteilhaft kann der Bausatz ein Crimpwerkzeug zum Herstellen einer elektrisch leitenden Crimpverbindung zwischen dem ersten Leiterstrang und dem Verbindungselement sowie dem zweiten Leiterstrang und dem Verbindungselement umfassen, wobei das Crimpwerkzeug vorteilhaft eine Sichtöffnung zum visuellen Zentrieren des Crimpwerkzeugs gegenüber der Verbindungsstelle der Leitungsstränge aufweist. Dies ermöglicht eine einfache und schnelle Montage der Schleifleitung vor Ort.

Eine eingangs genannte Schleifleitung ist erfindungsgemäß durch ein oben und nachfolgend beschriebenes erfindungsgemäßes Verbindungselement gekennzeichnet. Vorteilhaft kann die Schleifleitung eine Isolierabdeckung zum Abdecken einer Verbindungsstelle zweier miteinander verbundener Leiterstränge vorsehen, um Gefährdungen des Personals im Betrieb der Schleifleitung zu vermeiden.

Ein Verfahren zum Verbinden von zwei Stromschienen einer Schleifleitung mittels eines oben und nachfolgend beschriebenen erfindungsgemäßen Verbindungselements ist erfindungsgemäß gekennzeichnet durch die die Schritte a) Einstecken des Verbindungselements in jeweilige Längshohlräume der zwei zu verbindenden Stromschiene, b) Ausrichten von Druckstegen eines Crimpwerkzeugs auf entsprechende Verbindungsvertiefungen des Verbindungselements und c) Einpressen und dabei plastisches Verformen von Seitenwandungen der Stromschienen in die Verbindungsvertiefungen mittels der Druckstege des Crimpwerkzeugs. Bevorzugt können dabei in Schritt b) die Druckstege über eine Sichtöffnung des Crimpwerkzeugs auf die Verbindungsstelle zwischen den beiden Stromschienen ausgerichtet werden.

Weitere Besonderheiten und Vorteile der Erfindung ergeben sich aus der folgenden Beschreibung eines bevorzugten Ausführungsbeispiels anhand der Zeichnungen. Diese zeigen:
- **Fig. 1**: eine schematische dreidimensionale Schrägansicht eines erfindungsgemäßen Verbindungselements sowie zweier Leiterstränge einer Schleifleitung vor der Verbindung;
- **Fig. 2**: eine teilweise verbundene Schleifleitung gemäß Fig. 1 in vergrößerter Darstellung;
- **Fig. 3**: eine vollständig verbundene Schleifleitung gemäß Fig. 1 mit Verbindungswerkzeugen zum Herstellen der Verbindung der beiden Leiterstränge;
- **Fig. 4**: eine teilweise aufgeschnittene Ansicht der vollständig verbundenen Schleifleitung aus Fig. 3;
- **Fig. 5**: die verbundene Schleifleitung aus Fig. 4 mit einer Schutzabdeckung in teilweise aufgeschnittener Ansicht;
- **Fig. 6**: einen Querschnitt durch die Schleifleitung aus Fig. 4 längs der Ebene A;
- **Fig. 7**: einen Querschnitt durch die Schleifleitung aus Fig. 4 längs einer durch die Ebene A verlaufenden Verbindungsstelle.

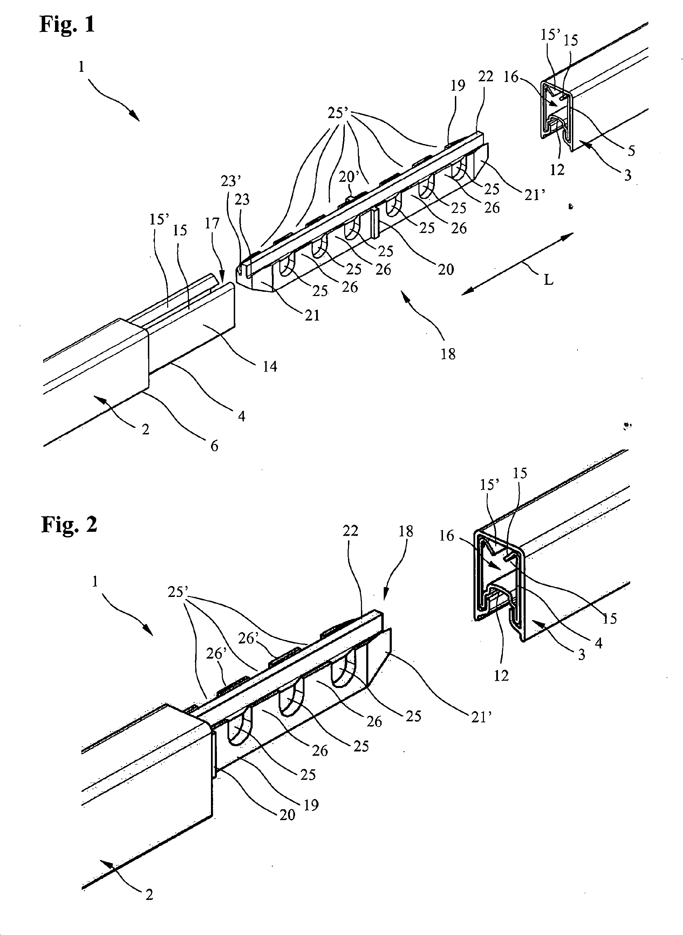

Fig. 1 zeigt einen Abschnitt einer Schleifleitung 1. Da die Schleifleitung 1 sehr lang ist, wird sie in der Regel aus einer Vielzahl aufeinander folgender Leiterstränge, welche aus Transportgründen nur eine bestimmte Maximallänge haben dürfen, zusammengesetzt. Exemplarisch zeigt Fig. 1 zeigt eine solche Stelle, an der ein erster Leiterstrang 2 mit einem zweiten Leiterstrang 3 verbunden werden soll.

Die Leiterstränge 2, 3 bestehen in an sich bekannter Weise aus einer ersten Stromschiene 4 bzw. zweiter Stromschiene 5, die jeweils von einem ersten Isolierprofil 6 bzw. zweiten Isolierprofil 7 aus Kunststoff umgeben sind, welches aus einem elektrisch isolierenden Kunststoffmaterial besteht. Die Stromschienen 4, 5 bestehen bevorzugt aus einem relativ weichen, elektrisch gut leitenden Material wie Aluminium oder Kupfer. Grundsätzlich können aber auch härtere Materialien wie Stahl verwendet werden.

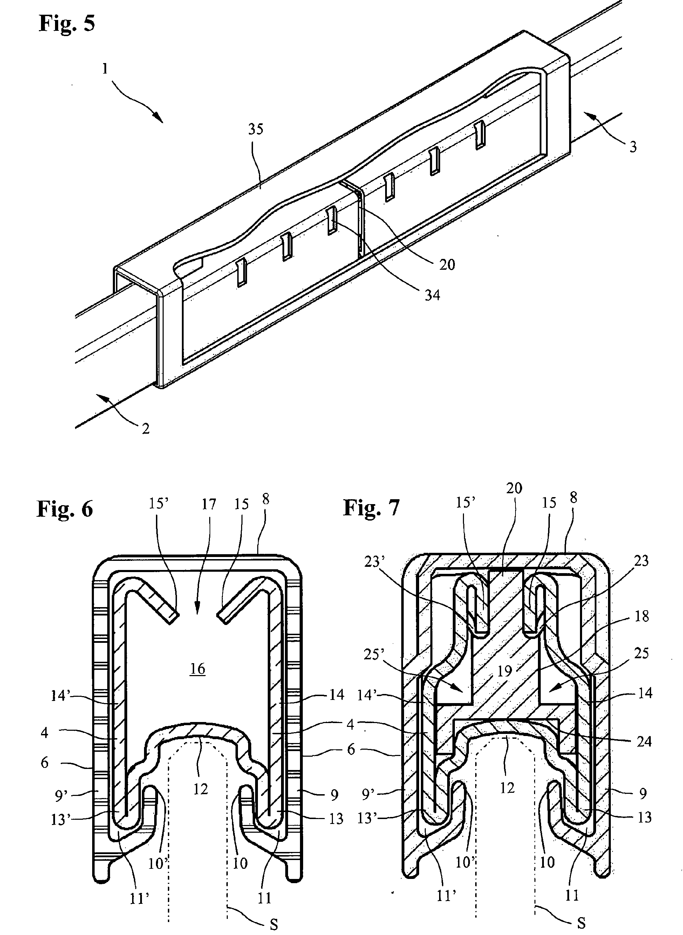

Die Schleifleitung 1 dient in an sich bekannter Weise zur Versorgung eines in ihrer Längsrichtung L daran verfahrbar oder beweglich angeordneten elektrischen Verbrauchers mit elektrischer Energie. Hierzu weist der Verbraucher einen Stromabnehmer mit einem in Fig. 6 und 7 lediglich angedeuteten Schleifstück S auf, das in den Stromschienen 4, 5 entlang gleitet und die elektrische Verbindung zwischen Verbraucher und Schleifleitung 1 herstellt. Oft werden auch mehrere Schleifleitungen 1 parallel zueinander angeordnet, so dass eine entsprechende Anzahl von Schleifstücken S verwendet wird. Der Verbraucher mit Stromabnehmer ist hinlänglich bekannt, so dass auf eine zeichnerische Darstellung verzichtet wurde.

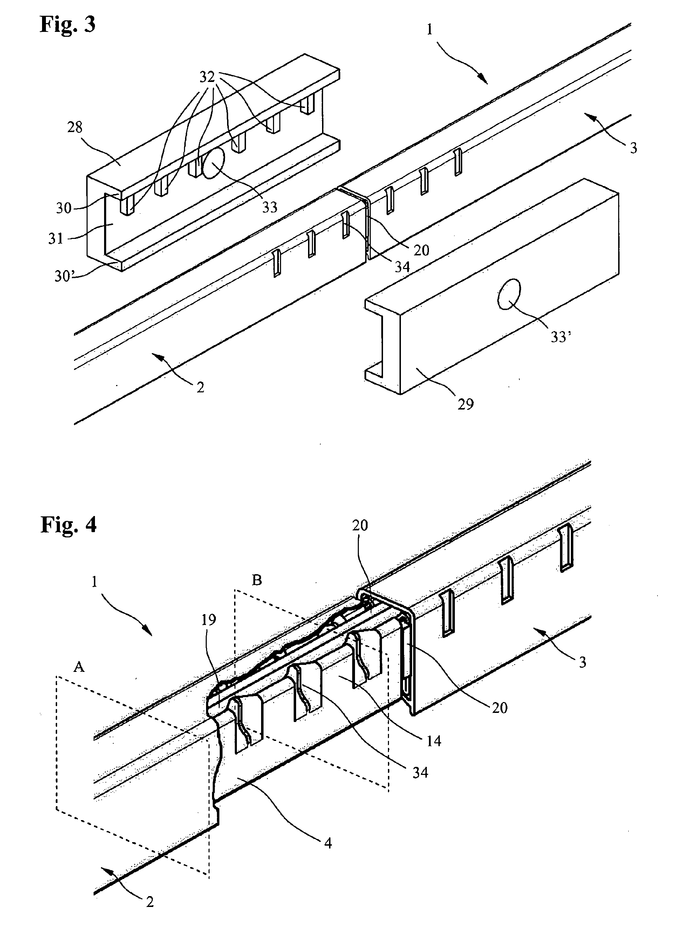

Der Aufbau der Leiterstränge 2, 3 wird nun anhand des Querschnitts durch den in den Fig. 1 bis 5 linken Leiterstrang 2 längs der Ebene A in Fig. 4 beschrieben. Da die Leiterstränge 2, 3, die Stromschienen 4, 5 und die Isolierprofile 6, 7 identisch ausgebildet sind, gelten entsprechende Ausführungen auch für den in Fig. 1 bis 5 rechten Leiterstrang 3.

Fig. 6 zeigt, dass das erste Isolierprofil 6 einen im wesentlichen U-förmigen Querschnitt mit einem Mittelabschnitt 8 hat, von dem Isolierwandungen 9, 9' im Wesentlichen rechtwinklig wegverlaufen. An ihren freien Enden weisen die Isolierwandungen 9, 9' rückwärts zum Mittelabschnitt 8 hin zeigende Rastnasen 10, 10' auf, so dass sich zwischen den Isolierwandungen 9, 9' und den Rastnasen 10, 10' Rastnuten 11, 11' zu lösbaren Halterung der ersten Stromschiene 4 ausbilden.

Wie in Fig. 6 gut erkennbar, ist die erste Stromschiene 4 aus einem länglichen Blechstrang hergestellt und weist einen im Wesentlichen H-förmigen Querschnitt auf Der Querbalken des H-förmigen Querschnitts bildet dabei einen trogförmigen Schleifabschnitt 12 für das Schleifstück S des Stromabnehmers des längs der Schleifleitung 1 verfahrbaren elektrischen Verbrauchers aus.

Vom Schleifabschnitt 12 verläuft der Blechstrang zunächst in etwa rechtwinklig in Richtung zum Schleifstück S hin. Durch Umbiegen des Blechstrangs um 180° bilden sich Raststege 13, 13' doppelter Blechstärke aus, welche dann in Richtung zum Schleifabschnitt 12 und darüber hinaus verlaufende Seitenwandungen 14, 14' übergehen. Auf einer den Raststegen 13, 13' gegenüberliegenden Seite des Schleifabschnitts 12 sind die Seitenwandungen 14, 14' zur Bildung von Zentrierkanten 15, 15' nach innen und zum Schleifabschnitt 12 hin umgebogen.

Der Schleifabschnitt 12, die Seitenwandungen 14, 14' und die Zentrierkanten 15, 15' bilden einen Längshohlraum 16 mit einer Zentrieröffnung 17 zwischen den Zentrierkanten 15, 15'.

Um das erste Isolierprofil 6 mit der ersten Stromschiene 4 zu verbinden, wird die erste Stromschiene 4 stirnseitig in das erste Isolierprofil 6 eingeschoben. Dabei umgreifen die Rastnasen 10, 10' die Raststege 13, 13', so dass die erste Stromschiene 4 nicht nach unten aus dem ersten Isolierprofil 6 herausfallen kann Das erste Isolierprofil 6 kann dann, wie in Fig. 1 angedeutet, in Längsrichtung L gegenüber der erste Stromschiene 4 verschoben werden, ohne davon herunterzugehen. Zudem stellen die Rastnasen 10, 10' einen Berührungsschutz der im Betrieb strom- bzw. spannungsführenden ersten Stromschiene 4 und besonders der Raststege 13, 13' dar. Die Öffnung zwischen den Rastnasen 10, 10' ist dabei gerade so breit, dass das Schleifstück S mit dem Schleifabschnitt 12 gleitenden kontaktieren kann, und andererseits so schmal, dass die Stromschiene 4 nicht mit einem Finger berührt werden kann.

Um die beiden Leiterstränge 2 und 3 elektrisch leitend und mechanisch miteinander zu verbinden, ist ein besonders in Fig. 1, 2 und 7 gut erkennbares erfindungsgemäßes Verbindungselement 18 vorgesehen. Das Verbindungselement 18 weist einen länglichen Grundkörper 19 mit einer weitgehend an den Längshohlraum 16 und die Zentrieröffnung 17 der Stromschienen 4, 5 angepassten Außenkontur auf. Das Verbindungselement 18 besteht bevorzugt aus dem gleichen Material wie die Stromschienen, um Korrosion aufgrund unterschiedlicher Materialien zu vermeiden. Werden unterschiedliche Materialien verwendet, wird für das Verbindungselement 18 ein härteres Material als das der Stromschienen 4, 5 gewählt.

Um zu verhindern, dass das Verbindungselement 18 bei der Montage vor Ort aus Versehen zu weit in die Stromschienen 4, 5 eingeschoben wird, weist es in seiner Längsmitte quer zur Längsrichtung L seitlich nach außen überstehenden Längsanschläge 20, 20' auf. Die Längsanschläge 20, 20' stoßen dann beim Einstecken des Verbindungselements 18 in die Stromschienen 4, 5 an deren jeweiligen Stirnseiten an. Bevorzugt stehen die Längsanschläge 20, 20' so weit seitlich über den Grundkörper 19 hinaus, dass auch die Stirnseiten der Isolierprofile 6, 7 daran anstoßen. So kann bei der Montage die Stoßstelle zwischen den beiden Leitersträngen 2, 3 leicht erkannt werden.

Um das Verbindungselement 18 einfacher in Längsrichtung L in die Längshohlräume 16 der Stromschienen 4, 5 einstecken zu können, verjüngen sich gegenüberliegenden Einsteckenden 21, 21' zu ihrem Ende hin, im vorliegenden Ausführungsbeispiel dadurch, dass die Unterseite des Grundkörpers 19 nach oben und die Längsseiten des Grundkörpers 19 nach innen zur zentralen Längsachse des Grundkörpers 19 hin abgeschrägt sind.

Um das Einstecken des Verbindungselements 18 in die Stromschienen weiter zu vereinfachen, ist ein in Längsrichtung des Grundkörpers 19 durchgehend verlaufender, in den Zeichnungen oben liegender Zentriersteg 22 vorgesehen. Der Zentriersteg 22 ist etwas schmaler als die Zentrieröffnung 17, so dass er ungehindert eingesteckt werden kann, wie in Fig. 7 gut erkennbar. Weiter sind am unteren Ende des Zentrierstegs 22 nach oben offene, in etwa V-förmige Längsnuten 23, 23' vorgesehen, welche an die V-förmig schräg nach innen gebogenen Zentrierkanten 15, 15' der Stromschienen 4, 5 angepasst sind. Hierdurch wird ein zentrierter Einschub des Verbindungselements 18 in die Stromschienen 4, 5 sichergestellt.

Auf seiner dem Zentriersteg 22 gegenüberliegenden Unterseite weist der Grundkörper 19 eine in Fig. 7 erkennbare breite Mittelnut 24 auf, in welcher der trogförmige Schleifabschnitt 12 der Stromschiene 4 zu liegen kommt. Auch hier wird ein möglichst guter und zentrierter Sitz des Verbindungselements 18 in den Stromschienen 4, 5 sichergestellt.

Grundsätzlich entsteht im Bereich des trogförmigen Schleifabschnitts 12 zwischen den Stromschienen 4, 5 eine der Breite der Längsanschläge 20, 20' entsprechende Lücke, an der das Schleifstück S verkannten oder abgerieben werden kann. Um dies zu vermeiden, kann der Grundkörper 19 auf seiner Unterseite an der Stelle Längsanschläge 20, 20' vorteilhaft einen in den Zeichnungen nicht erkennbaren, überstehenden Ausgleichssteg aufweisen, der so hoch oder geringfügig niedriger wie die Blechstärke der Stromschienen 4, 5 im Bereich des trogförmigen Schleifabschnitt 12 ist.

Um eine sichere, elektrisch leitende und mechanisch feste Verbindung der beiden Stromschienen 4, 5 und somit des ersten und zweiten Leiterstrangs 2, 3 zu ermöglichen, sind in die einander gegenüberliegenden Längsseiten des Grundkörpers 19 in dessen Längsrichtung mehrere nach oben offene U-förmige Verbindungsvertiefungen 25, 25' eingebracht, zwischen denen sich Verbindungsstege 26, 26' ausbilden. Aus Gründen der einfacheren Beschreibung werden alle auf einer Längsseite liegenden Verbindungsvertiefungen mit der gleichen Bezugsziffer 25 bzw. 25 bezeichnet. Entsprechendes gilt für die Verbindungsstege 26 bzw. 26'. Die Verbindungsvertiefungen 25, 25' sind vorliegend identisch ausgebildet und rechts bzw. links der Längsanschläge 20, 20' in jeweils gleichem Abstand voneinander über die Längsseiten des Grundkörpers 19 verteilt. Die nach oben hin offenen U-förmigen Verbindungsvertiefungen 25, 25' unterbrechen die äußeren Kanten der V-förmigen Längsnuten 23, 23' nach oben hin vollständig, wie in Fig. 7 erkennbar. Da im Bereich der Verbindungsstege 26, 26' die äußeren Kanten der V-förmigen Längsnuten 23, 23' noch stehen, bieten diese Bereich eine ausreichende Führung für die schräg einwärts gewandten Zentrierkanten 15, 15' beim Einschieben des Verbindungselements 18 in die Stromschienen 4, 5.

Um nach dem Einstecken des Verbindungselements 18 in die beiden Leiterstränge 2, 3 diese mechanisch fest und elektrisch leitend miteinander zu verbinden, werden mittels eines in Fig. 3 gezeigten Crimpwerkzeugs 27 die Seitenwandungen 14, 14' der Stromschienen 4, 5 fest mit den U-förmigen Verbindungsvertiefungen 25, 25' verfügt. Hierzu weist das Crimpwerkzeug 27 zwei identisch ausgebildete Werkzeughälfte 28, 29 auf, so dass nachfolgend nur die eine Werkzeughälfte 28 beschrieben wird, sofern möglich. Die Werkzeughälfte 28 hat quer zur Längsrichtung einen im wesentlichen U-förmigen Querschnitt, so dass sich Haltestege 30, 30' ausbilden. Auf einer zwischen den Haltestegen 30, 30' liegenden Crimpfläche 31 der Werkzeughälfte 28 sind dann entsprechend den Positionen der Verbindungsvertiefungen 25' am Grundkörper 19 eine entsprechende Anzahl an Druckstegen 32 vorgesehen.

Der Innenabstand der Haltestege 30, 30' ist etwas größer als die Höhe der Isolierprofile 6, 7, so dass die Haltestege 30, 30' die Leiterstränge 2, 3 seitlich umgreifen und eine Positionierung der Werkzeughälften 28, 29 und somit der Druckstege 32 gegenüber den Verbindungsvertiefungen 25 in Höhenrichtung der Leiterstränge 2, 3 sicherstellen.

Weiter ist in der Längsmitte der Werkzeughälften 28, 29 jeweils eine durchgehende Sichtöffnung 33, 33' vorgesehen, um die Werkzeughälften 28, 29 gegenüber den Längsanschlägen 20, 20' positionieren zu können. Hierdurch wird eine saubere Positionierung der Druckstege 32 gegenüber den Verbindungsvertiefungen 25 in Längsrichtung L erreicht.

Zur Herstellung der Crimpverbindung entsprechend Fig. 3 und 4 werden die beiden Werkzeughälften 28, 29 dann über die Sichtöffnungen 32, 32' auf die Längsanschläge 20, 20' ausgerichtet, wodurch die Druckstege 32 auf die durch das erste und zweite Isolierprofil 6, 7 verdeckten Verbindungsvertiefungen 25, 25' ausgerichtet werden. Anschließend werden die aufeinander ausgerichteten Werkzeughälften 28, 29 aufeinander zu gedrückt, wodurch die Druckstege 32 sowohl die Isolierwandungen 9, 9' des ersten und zweiten Isolierprofils 6, 7 als auch die Seitenwandungen 14, 14' der Stromschienen 4, 5 in die Verbindungsvertiefungen 25, 25' einpressen. Die Druckstege 32 sind deshalb etwas schmaler und kürzer als die Verbindungsvertiefungen 25', um ein Ausstanzen der Seitenwandungen 14, 14' beim Vercrimpen der Stromschienen 4, 5 mit dem Verbindungselement 18 zu verhindern.

Wie besonders gut in Fig. 4 und anhand des Schnitts durch die Crimpstelle 33 entlang der Ebene B in Fig. 7 erkennbar, werden hierdurch die Zentrierkanten 15, 15' im Bereich der Verbindungsvertiefungen 25, 25' gegen den Zentriersteg 22 bewegt und so stark eingedrückt, dass sie dort plastisch verformt und somit dauerhaft am Zentriersteg 22 anliegen. Hierdurch wird eine zusätzliche sichere Übertragung des Stroms zwischen Stromschienen 4, 5 über das Verbindungselement 18 sichergestellt. Da sich auch die Seitenwandungen 14, 14' der Stromschienen 4, 5 fest in die Verbindungsvertiefungen 25, 25' plastisch verformt dauerhaft einfügen, wird zusätzlich zur gut elektrische leitenden Verbindung eine sichere und dauerhafte feste mechanische Verbindung zwischen Verbindungselement 18 und Stromschienen 4, 5 erreicht. Auf diese Weise lässt sich auch einfach eine schnelle und dennoch sichere, gut leitenden Verbindung herstellen, wobei insbesondere keine zusätzlichen Sicherungselemente wie Schraubverbindungen, Zapfen o.ä. vorgesehen werden müssen.

Da die Stromschienen 4, 5 bevorzugt aus einem relativ weichen, elektrisch gut leitenden Material wie Aluminium oder Kupfer bestehen, kann die oben beschriebene Crimpverbindung einfach und mit geringem Montageaufwand hergestellt werden. Grundsätzlich können aber auch härtere Materialien wie Stahl verwendet werden, sofern die Materialdicke ein Crimpen der Seitenwandungen noch zulässt.

Da auch die Isolierwandungen 9, 9' durch die Druckstege 32 eingedrückt und dauerhaft plastisch verformt werden, sind auch die Isolierprofile 6, 7 in Längsrichtung festgelegt.

Um eine Berührung der nicht von den Isolierprofilen 6, 7 verdeckten Längsanschläge 20, 20' zu verhindern, wird nach dem Vercrimpen noch eine U-förmige Kunststoffabdeckung 35 über die Stoßstelle der der beiden vercrimpten Leiterstränge 2, 3 aufgeklippst, welche die unten liegende Eingriffsöffnung für das Schleifstück S des Stromabnehmers offen lässt.

### Bezugszeichenliste

- 1: Schleifleitung
- 2: erster Leiterstrang
- 3: zweiter Leiterstrang
- 4: erste Stromschiene
- 5: zweite Stromschiene
- 6: erstes Isolierprofil
- 7: zweites Isolierprofil
- 8: Mittelabschnitt
- 9, 9': Isolierwandungen
- 10, 10': Rastnasen
- 11, 11': Rastnuten
- 12: trogförmiger Schleifabschnitt
- 13, 13': Raststege
- 14, 14': Seitenwandungen
- 15, 15': Zentrierkanten
- 16: Längshohlraum
- 17: Zentrieröffnung
- 18: Verbindungselement
- 19: Grundkörper
- 20, 20': Längsanschläge
- 21, 21': Einsteckenden
- 22: Zentriersteg
- 23, 23': V-förmige Längsnuten
- 24: Mittelnut
- 25, 25': U-förmige Verbindungsvertiefungen
- 26: Verbindungsstege
- 27: Crimpwerkzeug
- 28: erste Werkzeughälfte
- 29: zweite Werkzeughälfte
- 30, 30': Haltestege
- 31: Crimpfläche
- 32: Druckstege
- 33, 33': Sichtöffnungen
- 34: Crimpstelle
- 35: Isolierabdeckung

## Patentansprüche

1. Verbindungselement (18) zum Verbinden von zwei Stromschienen (4, 5) einer Schleifleitung (1), mit einem länglichen Grundkörper (19) mit einander in seiner Längsrichtung (L) gegenüberliegenden Einsteckenden (21, 12') zum Einstecken in Längshohlräume (16) der Stromschienen (4, 5), **dadurch gekennzeichnet, dass** der Grundkörper (19) auf mindestens einer seiner Längsseiten Verbindungsvertiefungen (25, 25') zum Vercrimpen mit mindestens einer Seitenwandung (14, 14') der Stromschienen (4, 5) aufweist.

2. Verbindungselement (18) nach Anspruch 1, **dadurch gekennzeichnet, dass** auf beiden einander gegenüberliegenden Längsseiten des Grundkörpers (19) Verbindungsvertiefungen (25, 25') zum Vercrimpen mit einander gegenüberliegenden Seitenwandungen (14, 14') der Stromschienen (4, 5) vorgesehen sind.

3. Verbindungselement (18) nach Anspruch 1 oder 2, **dadurch gekennzeichnet, dass** die Verbindungsvertiefungen (25, 25') nach einer Seite hin, insbesondere nach oben hin, offen sind, und/oder dass die Verbindungsvertiefungen (25, 25') U-förmig sind.

4. Verbindungselement (18) nach einem der voranstehenden Ansprüche, **dadurch gekennzeichnet, dass** der Grundkörper (19) mindestens einen quer zur Längsrichtung (L) des Grundkörpers (19) herausragenden Längsanschlag (20, 20') aufweist und/oder dass der Grundkörper (19) mindestens einen in seiner Längsrichtung (L) verlaufenden Zentriersteg (22).

5. Verbindungselement (18) nach einem der voranstehenden Ansprüche, **dadurch gekennzeichnet, dass** der Grundkörper (19) eine in Längsrichtung (L) verlaufende Mittelnut (24) zur Aufnahme eines trogförmigen Schleifabschnitts (12) der Stromschienen (4, 5) hat, insbesondere wobei die Mittelnut (24) durch einen quer zur Längsrichtung (L) des Grundkörpers (19) verlaufenden Ausgleichssteg unterbrochen ist.

6. Bausatz für eine Schleifleitung (1) mit einem ersten Leiterstrang (2), einem zweiten Leiterstrang (3) und einem Verbindungselement (18) zum elektrisch leitenden und mechanischen verbinden des ersten Leiterstrangs (2) mit dem zweiten Leiterstrang (3), **dadurch gekennzeichnet, dass** das Verbindungselement (18) nach einem der Ansprüche 1 bis 5 ausgebildet ist.

7. Bausatz für eine Schleifleitung (1) nach Anspruch 6, **dadurch gekennzeichnet, dass** er ein Crimpwerkzeug (27, 28, 29) zum Herstellen einer elektrisch leitenden Crimpverbindung zwischen dem ersten Leiterstrang (2) und dem Verbindungselement (18) sowie dem zweiten Leiterstrang (3) und dem Verbindungselement (18) umfasst.

8. Bausatz für eine Schleifleitung (1) nach Anspruch 7, **dadurch gekennzeichnet, dass** das Crimpwerkzeug (27, 28, 29) eine Sichtöffnung (33, 33') zum visuellen Zentrieren des Crimpwerkzeugs (27, 28, 29) gegenüber der Verbindungsstelle der Leitungsstränge (2, 3) aufweist.

9. Bausatz für eine Schleifleitung (1) nach Anspruch 7 oder 8, **dadurch gekennzeichnet, dass** das Crimpwerkzeug (27, 28, 29) an einer Crimpfläche (31) entsprechend der Verbindungsvertiefungen (25, 25') im Verbindungselement (18) angeordnete Druckstege (32) zum plastischen Verformen, insbesondere Crimpen, der Stromschienen (4, 5) aufweist.

10. Bausatz für eine Schleifleitung (1) nach einem der Ansprüche 7 bis 9, **dadurch gekennzeichnet, dass** das Crimpwerkzeug (27) zwei Werkzeughälften (28, 29) aufweist, die in Längsrichtung (L) der Leiterstränge (2, 3) verlaufende Haltestege (30, 30') zum teilweisen Umgreifen der zu verbindenden Leiterstränge (2, 3) aufweist.

11. Schleifleitung (1) mit mindestens einem ersten Leiterstrang (2) und einem zweiten Leiterstrang (3), die mit einem Verbindungselement (18) elektrisch leitend und mechanisch verbunden sind, **dadurch gekennzeichnet, dass** das Verbindungselement (18) nach einem der Ansprüche 1 bis 5 ausgebildet ist.

12. Schleifleitung (1) nach Anspruch 11, **dadurch gekennzeichnet, dass** Stromschienen (4, 5) der Leiterstränge einen Längshohlraum (16) zum Einstecken des Verbindungselements (18) aufweisen.

13. Schleifleitung (1) nach Anspruch 12, **dadurch gekennzeichnet, dass** der Längshohlraum (16) nach einer Längsseite hin eine in seine Längsrichtung (L) verlaufende Zentrieröffnung (17) zur Aufnahme eines Zentrierstegs (22) des Verbindungselements (18) aufweist.

14. Schleifleitung (1) nach Anspruch 13, **dadurch gekennzeichnet, dass** die Zentrieröffnung (17) zwischen schräg nach innen und zum Längshohlraum (16) hin verlaufenden, von einander beabstandeten Zentrierkanten (15, 15') der Stromschienen (4, 5) verläuft.

15. Verfahren zum Verbinden von zwei Stromschienen (4, 5) einer Schleifleitung (1) mittels eines Verbindungselements (18) nach einem der Ansprüche 1 bis 5 und insbesondere unter Verwendung eines Bausatzes nach einem der Ansprüche 6 bis 10, **gekennzeichnet durch** die Schritte:
a) Einstecken des Verbindungselements (18) in jeweilige Längshohlräume (16) der zwei zu verbindenden Stromschienen (4, 5),
b) Ausrichten von Druckstegen (32) eines Crimpwerkzeugs (27, 28, 29) auf entsprechende Verbindungsvertiefungen (25, 25') des Verbindungselements (18), und
c) Einpressen und dabei plastisches Verformen von Seitenwandungen (14, 14') der Stromschienen (4, 5) in die Verbindungsvertiefungen (25, 25') mittels der Druckstege (32).

16. Verfahren nach Anspruch 15, **dadurch gekennzeichnet, dass** die Druckstege (32) in Schritt b) über mindestens eine Sichtöffnung (33, 33') des Crimpwerkzeugs (27, 28, 29) auf die Verbindungsstelle zwischen den beiden Stromschienen (4, 5) ausgerichtet werden.

## Claims

1. Connecting element (18) for connection of two conductor rails (4, 5) of a contact line (1), comprising an elongated base body (19) with insertion ends (21, 21') opposing one another in its longitudinal direction (L) for insertion into longitudinal cavities (16) of the conductor rails (4, 5), **characterised in that** on at least one of its longitudinal sides the base body (19) exhibits connecting recesses (25, 25') for crimping with at least one side wall (14, 14') of the conductor rails (4, 5).

2. Connecting element (18) according to claim 1, **characterised in that** connecting recesses (25, 25') are provided on both the opposing longitudinal sides of the base body (19) for crimping with opposing side walls (14, 14') of the conductor rails (4, 5).

3. Connecting element (18) according to claim 1 or 2, **characterised in that** the connecting recesses (25, 25') are open on one side, in particular towards the top, and/or **in that** the connecting recesses (25, 25') are U-shaped.

4. Connecting element (18) according to one of the preceding claims, **characterised in that** the base body (19) exhibits at least one longitudinal stop (20, 20') protruding transversely in relation to the longitudinal direction (L) of the base body (19) and/or **in that** the base body (19) exhibits at least one centering strip (22) running in its longitudinal direction (L).

5. Connecting element (18) according to one of the preceding claims, **characterised in that** the base body (19) has a central channel (24) running in the longitudinal direction (L) for receiving a trough-shaped contact section (12) of the conductor rails (4, 5), wherein in particular the central channel (24) is interrupted by an equalising element running transversely in relation to the longitudinal direction (L) of the base body (19).

6. Construction kit for a contact line (1) with a first conductor section (2), a second conductor section (3) and a connecting element (18) for electrically conducting and mechanical connection of the first conductor section (2) with the second conductor section (3), **characterised in that** the connecting element (18) is embodied according to one of claims 1 to 5.

7. Construction kit for a contact line (1) according to claim 6, **characterised in that** it comprises a crimping tool (27, 28, 29) for producing an electrically conducting crimped connection between the first conductor section (2) and the connecting element (18) and between the second conductor section (3) and the connecting element (18).

8. Construction kit for a contact line (1) according to claim 7, **characterised in that** the crimping tool (27, 28, 29) exhibits a sighting opening (33, 33') for visual centering of the crimping tool (27, 28, 29) in relation to the connection location of the conductor sections (2, 3).

9. Construction kit for a contact line (1) according to claim 7 or 8, **characterised in that** the crimping tool (27, 28, 29) exhibits pressure elements (32) arranged on a crimping face (31) corresponding to the connecting recesses (25, 25') in the connecting element (18) for plastic deformation, in particular crimping, of the conductor rails (4, 5).

10. Construction kit for a contact line (1) according to one of claims 7 to 9, **characterised in that** the crimping tool (27) exhibits two tool halves (28, 29) which exhibit holding elements (30, 30') running in the longitudinal direction (L) of the conductor sections (2, 3) for partially gripping around the conductor sections (2, 3) to be connected.

11. Contact line (1) with at least a first conductor section (2) and a second conductor section (3) which are connected electrically and mechanically with a connecting element (18), **characterised in that** the connecting element (18) is embodied according to one of claims 1 to 5.

12. Contact line (1) according to claim 11, **characterised in that** conductor rails (4, 5) of the conductor sections exhibit a longitudinal cavity (16) for insertion of the connecting element (18).

13. Contact line (1) according to claim 12, **characterised in that** on one longitudinal side the longitudinal cavity (16) exhibits a centering opening (17) running in its longitudinal direction (L) for receiving a centering strip (22) of the connecting element (18).

14. Contact line (1) according to claim 13, **characterised in that** the centering opening (17) runs between spaced centering edges (15, 15') of the conductor rails (4, 5) running obliquely inwards towards the longitudinal cavity (16).

15. Method for connection of two conductor rails (4, 5) of a contact line (1) by means of a connecting element (18) according to one of claims 1 to 5 and in particular using a construction kit according to one of claims 6 to 10, **characterised by** the steps:
a) insertion of the connecting element (18) in respective longitudinal cavities (16) of the two conductor rails (4, 5) to be connected,
b) alignment of pressure elements (32) of a crimping tool (27, 28, 29) on corresponding connecting recesses (25, 25') of the connecting element (18), and
c) compression and in the process plastic deformation of side walls (14, 14') of the conductor rails (4, 5) into the connecting recesses (25, 25') by means of the pressure elements (32).

16. Method according to claim 15, **characterised in that** in step b) the pressure elements (32) are aligned on the connection location between the two conductor rails (4, 5) by means of at least one sighting opening (33, 33') of the crimping tool (27, 28,29).

## Revendications

1. Elément d'assemblage (18) servant à assembler deux barres omnibus (4, 5) d'une ligne de contact (1), comprenant un corps de base (19) allongé pourvu d'extrémités d'enfichage (21, 12') se faisant face les unes les autres dans le sens longitudinal (L) dudit corps de base, destinées à être enfichées dans des espaces creux longitudinaux (16) des barres omnibus (4, 5), **caractérisé en ce que** le corps de base (19) présente, sur au moins un de ses côtés longitudinaux, des renfoncements d'assemblage (25, 25') destinés à être fixés par sertissage à au moins une paroi latérale (14, 14') des barres omnibus (4, 5).

2. Elément d'assemblage (18) selon la revendication 1, **caractérisé en ce que** sont prévus, sur les deux côtés longitudinaux, se faisant face l'un l'autre, du corps de base (19), des renfoncements d'assemblage (25, 25') destinés à être fixés par sertissage à des parois latérales (14, 14'), se faisant face les unes les autres, des barres omnibus (4, 5).

3. Elément d'assemblage (18) selon la revendication 1 ou 2, **caractérisé en ce que** les renfoncements d'assemblage (25, 25') sont ouverts en direction d'un côté, en particulier vers le haut, et/ou **en ce que** les renfoncements d'assemblage (25, 25') présentent une forme en U.

4. Elément d'assemblage (18) selon l'une quelconque des revendications précédentes, **caractérisé en ce que** le corps de base (19) présente au moins une butée longitudinale (20, 20') faisant saillie de manière transversale par rapport au sens longitudinal (L) du corps de base (19), et/ou **en ce que** le corps de base (19) présente au moins une entretoise de centrage (22) s'étendant dans le sens longitudinal (L) dudit corps de base.

5. Elément d'assemblage (18) selon l'une quelconque des revendications précédentes, **caractérisé en ce que** le corps de base (19) a une rainure centrale (24), s'étendant dans le sens longitudinal (L), servant à recevoir un tronçon de contact (12) en forme d'auge des barres omnibus (4, 5), la rainure centrale (24) étant en particulier interrompue par une entretoise de compensation s'étendant de manière transversale par rapport au sens longitudinal (L) du corps de base (19).

6. Kit de montage pour une ligne de contact (1) comprenant un premier faisceau de conducteurs (2), un deuxième faisceau de conducteurs (3) et un élément d'assemblage (18) servant à assembler de manière électroconductrice et de manière mécanique le premier faisceau de conducteurs (2) au deuxième faisceau de conducteurs (3), **caractérisé en ce que** l'élément d'assemblage (18) est réalisé selon l'une quelconque des revendications 1 à 5.

7. Kit de montage pour une ligne de contact (1) selon la revendication 6, **caractérisé en ce qu'**il comprend un outil de sertissage (27, 28, 29) servant à produire un assemblage par sertissage électroconducteur entre le premier faisceau de conducteurs (2) et l'élément d'assemblage (18) ainsi qu'entre le deuxième faisceau de conducteurs (3) et l'élément d'assemblage (18).

8. Kit de montage pour une ligne de contact (1) selon la revendication 7, **caractérisé en ce que** l'outil de sertissage (27, 28, 29) présente une ouverture de contrôle (33, 33') servant à centrer visuellement l'outil de sertissage (27, 28, 29) par rapport à l'endroit d'assemblage des faisceaux de conduction (2, 3).

9. Kit de montage pour une ligne de contact (1) selon la revendication 7 ou 8, **caractérisé en ce que** l'outil de sertissage (27, 28, 29) présente, au niveau d'une surface de sertissage (31), de manière à correspondre aux renfoncements d'assemblage (25, 25'), des entretoises de compression (32) disposées dans l'élément d'assemblage (18), servant à déformer plastiquement, en particulier servant à sertir, les barres omnibus (4, 5).

10. Kit de montage pour une ligne de contact (1) selon l'une quelconque des revendications 7 à 9, **caractérisé en ce que** l'outil de sertissage (27) présente deux moitiés d'outil (28, 29), qui présentent des entretoises de maintien (30, 30') s'étendant dans le sens longitudinal (L) des faisceaux de conducteurs (2, 3), servant à saisir en partie les faisceaux de conducteurs (2, 3) à assembler.

11. Ligne de contact (1) comprenant au moins un premier faisceau de conducteurs (2) et un deuxième faisceau de conducteurs (3), qui sont assemblés de manière électroconductrice et de manière mécanique à un élément d'assemblage (18), **caractérisée en ce que** l'élément d'assemblage (18) est réalisé selon l'une quelconque des revendications 1 à 5.

12. Ligne de contact (1) selon la revendication 11, **caractérisée en ce que** des barres omnibus (4, 5) des faisceaux de conducteurs présentent un espace creux longitudinal (16) destiné à l'enfichage de l'élément d'assemblage (18).

13. Ligne de contact (1) selon la revendication 12, **caractérisée en ce que** l'espace creux longitudinal (16) présente, en direction d'un côté longitudinal, une ouverture de centrage (17) s'étendant dans le sens longitudinal (L) de l'espace creux longitudinal, servant à recevoir une entretoise de centrage (22) de l'élément d'assemblage (18).

14. Ligne de contact (1) selon la revendication 13, **caractérisée en ce que** l'ouverture de centrage (17) s'étend entre des arêtes de centrage (15, 15'), s'étendant à l'oblique vers l'intérieur et en direction de l'espace creux longitudinal (16), espacées l'une de l'autre, des barres omnibus (4, 5).

15. Procédé servant à assembler deux barres omnibus (4, 5) d'une ligne de contact (1) au moyen d'un élément d'assemblage (18) selon l'une quelconque des revendications 1 à 5, et en particulier en utilisant un kit de montage selon l'une quelconque des revendications 6 à 10, **caractérisé par** les étapes suivantes consistant à :
a) enficher l'élément d'assemblage (18) dans des espaces creux longitudinaux (16) respectifs des deux barres omnibus (4, 5) à assembler ;
b) aligner des entretoises de compression (32) d'un outil de sertissage (27, 28, 29) sur des renfoncements d'assemblage (25, 25') correspondants de l'élément d'assemblage (18) ; et
c) enfoncer et, ce faisant, déformer de manière plastique des parois latérales (14, 14') des barres omnibus (4, 5) dans les renfoncements d'assemblage (25, 25') au moyen des entretoises de compression (32).

16. Procédé selon la revendication 15, **caractérisé en ce que** les entretoises de compression (32) sont alignées, à l'étape b), par l'intermédiaire au moins d'une ouverture de contrôle (33, 33') de l'outil de sertissage (27, 28, 29), sur l'endroit d'assemblage entre les deux barres omnibus (4, 5).
